# EUROPÄISCHE PATENTSCHRIFT

(11) **EP 3 899 219 B1**
(45) Veröffentlichungstag und Bekanntmachung des Hinweises auf die Patenterteilung: **03.08.2022**
(21) Anmeldenummer: 19809057.3
(22) Anmeldetag: 22.11.2019
(51) Int. Cl.: F01N 3/027, F01N 3/20, F01N 3/031, F01N 9/00

(54) **VERFAHREN ZUM BETREIBEN EINER ANTRIEBSEINRICHTUNG SOWIE ENTSPRECHENDE ANTRIEBSEINRICHTUNG**
METHOD FOR OPERATING A PROPULSION DEVICE AND CORRESPONDING PROPULSION DEVICE
PROCÉDÉ DE PILOTAGE D'UN ENSEMBLE PROPULSIF ET ENSEMBLE PROPULSIF CORRESPONDANT

(30) Priorität: 20.12.2018 DE 102018222512
(43) Veröffentlichungstag der Anmeldung: 27.10.2021
(73) Patentinhaber: Audi AG, 85045 Ingolstadt (DE)
(72) Erfinder: HALL, Matthew David, 71672 Marbach am Neckar (DE); SCHIEDT, Guido, 71397 Leutenbach (DE)
(74) Vertreter: Dietz, Christopher Friedrich
(86) Internationale Anmeldenummer: PCT/EP2019/082301
(87) Internationale Veröffentlichungsnummer: WO 2020/126314

(56) Entgegenhaltungen:
- DE-A1- 4 435 213
- GB-A- 2 254 014
- JP-A- S59 173 515
- JP-A- 2013 124 609

## Beschreibung

Die Erfindung betrifft ein Verfahren zum Betreiben einer Antriebseinrichtung, die ein Antriebsaggregat sowie eine in einer Abgasleitung angeordnete Abgasreinigungseinrichtung zur Reinigung von Abgas des Antriebsaggregats aufweist, wobei die Abgasreinigungseinrichtung zumindest zeitweise mittels einer elektrischen Heizanordnung beheizt wird, die ein Heizelement zum Erwärmen eines Fluids sowie eine einerseits der Abgaseinrichtung von der Abgasleitung abzweigende und andererseits in sie einmündende Bypassleitung aufweist, in der eine Fluidpumpe zum Fördern des Fluids durch die Abgasreinigungseinrichtung angeordnet ist. Die Erfindung betrifft weiterhin eine Antriebseinrichtung.

Aus dem Stand der Technik ist beispielsweise die Druckschrift GB 2 254 014 A1 bekannt. Diese beschreibt einen schnell aufwärmbaren katalytischen Konverter beziehungsweise einen Abgastrakt mit einem katalytischen Konverter und einer Bypassleitung, die strömungstechnisch parallel zu dem katalytischen Konverter zur Ausbildung einer geschlossenen Rezirkulationsschleife um den Konverter angeschlossen ist. Ein Gebläse erzwingt eine Rezirkulation von Gasen durch die Schleife und ein elektrisch betriebener Heizer ist entlang der Schleife angeordnet, um das rezirkulierende Gas zu erwärmen, um eine Aufheizzeit zu verringern.

Es ist Aufgabe der Erfindung, ein Verfahren zum Betreiben einer Antriebseinrichtung vorzuschlagen, welches gegenüber bekannten Verfahren Vorteile aufweist, insbesondere ein rasches Aufheizen der Abgasreinigungseinrichtung bei gleichzeitig gleichmäßiger Durchwärmung ermöglicht.

Dies wird erfindungsgemäß mit einem Verfahren zum Betreiben einer Antriebseinrichtung mit den Merkmalen des Anspruchs 1 erreicht. Dabei ist vorgesehen, dass zum Beheizen der Abgasreinigungseinrichtung vor einem Starten des Antriebsaggregats die Fluidpumpe zum Durchströmen der Abgasreinigungseinrichtung mit mittels des Heizelements erwärmtem Fluid entgegen einer Abgasströmungsrichtung durch die Abgasleitung betrieben wird.

Das Verfahren dient zum Betreiben der Antriebseinrichtung, welche beispielsweise Bestandteil eines Kraftfahrzeugs ist. In diesem Fall dient die Antriebseinrichtung dem Antreiben des Kraftfahrzeugs und insoweit dem Bereitstellen eines auf das Antreiben des Kraftfahrzeugs gerichteten Drehmoments. Zum Erzeugen des Antriebsdrehmoments weist die Antriebseinrichtung das Antriebsaggregat auf, welches während seines Betriebs Abgas erzeugt. Das Antriebsaggregat liegt beispielsweise in Form einer Brennkraftmaschine oder dergleichen vor.

Zum Abführen des von dem Antriebsaggregat erzeugten Abgases weist die Antriebseinrichtung die Abgasleitung auf. Die Abgasleitung dient dem Abführen des Abgases von dem Antriebsaggregat, insbesondere in Richtung einer Außenumgebung. Einerseits ist also die Abgasleitung an das Antriebsaggregat strömungstechnisch angeschlossen. Andererseits mündet sie in die Außenumgebung ein. In der Abgasleitung ist die Abgasreinigungseinrichtung angeordnet, welche zur Reinigung des Abgases dient. Die Abgasreinigungseinrichtung liegt beispielsweise in Form eines Fahrzeugkatalysators und/oder eines Partikelfilters vor. Vorzugsweise wird der Abgasleitung das gesamte von dem Antriebsaggregat erzeugte Abgas zugeführt, sodass dieses während des Betriebs des Antriebsaggregats vollständig die Abgasreinigungseinrichtung durchströmt. Erst stromabwärts der Abgasreinigungseinrichtung wird das Abgas der Außenumgebung zugeführt.

Das Abgas durchströmt die Abgasleitung und die Abgasreinigungseinrichtung während eines Betriebs des Antriebsaggregats in einer bestimmten Abgasströmungsrichtung, welche von dem Antriebsaggregat ausgeht und in Richtung der Außenumgebung weist. Um eine effektive Reinigung des Abgases mittels der Abgasreinigungseinrichtung zu erzielen, ist es notwendig, dass die Abgasreinigungseinrichtung eine bestimmte Temperatur aufweist, welche auch als Betriebstemperatur der Abgasreinigungseinrichtung bezeichnet werden kann. Bis zum Erreichen dieser Betriebstemperatur durch eine momentane Temperatur der Abgasreinigungseinrichtung werden in dem Abgas enthaltene Schadstoffe lediglich teilweise in ungefährlichere Produkte umgewandelt. Entspricht jedoch die Temperatur der Betriebstemperatur oder liegt zumindest in einem Betriebstemperaturbereich der Abgasreinigungseinrichtung, so werden die Schadstoffe vollständig oder zumindest größtenteils in die ungefährlichen Produkte umgewandelt, beispielsweise durch Oxidation und/oder Reduktion.

Um die Abgasreinigungseinrichtung möglichst rasch aufzuheizen und auf ihre Betriebstemperatur zu bringen, liegt die elektrische Heizanordnung vor. Diese verfügt über das Heizelement sowie die Bypassleitung, in welcher wiederum die Fluidpumpe angeordnet ist. Mithilfe der Fluidpumpe wird zumindest zeitweise das Fluid durch die Bypassleitung und die Abgasleitung umgewälzt und hierbei mithilfe des Heizelements erwärmt. Das so aufgewärmte Fluid durchströmt die Abgasreinigungseinrichtung und heizt diese insoweit auf. Das Fluid kann beispielsweise Luft, Abgas oder ein Abgas-LuftGemisch sein. Das Fluid wird mithilfe der Fluidpumpe derart umgewälzt, dass sich eine Kreislaufströmung durch die Bypassleitung und die Abgasleitung ergibt, welche durch die Abgasreinigungseinrichtung verläuft.

Nach einem Starten des Antriebsaggregats wird die Abgasreinigungseinrichtung von dem von dem Antriebsaggregat erzeugten Abgas durchströmt. Das Abgas weist eine vergleichsweise hohe Temperatur auf, sodass die Abgasreinigungseinrichtung rasch aufgeheizt wird. Hierbei wird die dem Antriebsaggregat strömungstechnisch zugewandte Seite der Abgasreinigungseinrichtung rascher aufgeheizt als die dem Antriebsaggregat abgewandte Seite, sodass schlussendlich eine ungleichmäßige Durchwärmung der Abgasreinigungseinrichtung vorliegt, bis die Abgasreinigungseinrichtung vollständig aufgeheizt ist und ihre Betriebstemperatur aufweist. Aus diesem Grund ist es nun vorgesehen, die Abgasreinigungseinrichtung bereits vor dem Starten des Antriebsaggregats zu beheizen, nämlich mithilfe der elektrischen Heizanordnung. Um auch unmittelbar nach dem Starten des Antriebsaggregats eine gleichmäßige Durchwärmung der Abgasreinigungseinrichtung zu erzielen, soll jedoch das mithilfe des Heizelements erwärmte Fluid die Abgasreinigungseinrichtung nicht in Abgasströmungsrichtung, sondern vielmehr entgegen der Abgasströmungsrichtung durchströmen.

Das bedeutet, dass mithilfe der Heizanordnung vor dem Starten des Antriebsaggregats die dem Antriebsaggregat abgewandte Seite der Abgasreinigungseinrichtung schneller erwärmt wird als die dem Antriebsaggregat zugewandte Seite. Wird nun das Antriebsaggregat gestartet, durchströmt also das heiße Abgas des Antriebsaggregats die Abgasreinigungseinrichtung, so sind die während des weiteren Aufheizens der Abgasreinigungseinrichtung auftretenden Wärmespannungen deutlich verringert, weil die Abgasreinigungseinrichtung auch auf ihrer dem Antriebsaggregat abgewandten Seite bereits eine vergleichsweise hohe Temperatur aufweist.

Unter dem Starten des Antriebsaggregats ist zu verstehen, dass das Antriebsaggregat aus einem abgeschalteten Zustand in einen angeschalteten Zustand versetzt wird. In dem abgeschalteten Zustand erzeugt das Antriebsaggregat kein Abgas, wohingegen es in den angeschalteten Zustand Abgas erzeugt. Im Falle einer Brennkraftmaschine steht das abgeschaltete Antriebsaggregat still, weist also vorzugsweise eine Drehzahl von null auf. Während des Startens der Brennkraftmaschine wird die Drehzahl erhöht, bis sie eine von null verschiedene Drehzahl erreicht hat, die insbesondere mindestens einer Mindestdrehzahl oder einer Leerlaufdrehzahl entspricht.

Die Mindestdrehzahl beschreibt hierbei eine Drehzahl der Brennkraftmaschine, ab welcher diese selbsttätig, also ohne äußeren Krafteinfluss, ihre Drehzahl weiter erhöhen kann. Die Leerlaufdrehzahl ist hingegen üblicherweise derart gewählt, dass die Brennkraftmaschine bei lastfreiem Zustand möglichst verbrauchsarm und gleichzeitig laufruhig betrieben wird. Die Leerlaufdrehzahl ist üblicherweise höher als die Mindestdrehzahl. Nach dem Starten des Antriebsaggregats befindet sich das Antriebsaggregat in seinem angeschalteten Zustand. In diesem erzeugt es Abgas. Im Falle der Brennkraftmaschine liegt in dem angeschalteten Zustand eine von null verschiedene Drehzahl vor, welche insbesondere mindestens der Mindestdrehzahl oder mindestens der Leerlaufdrehzahl entspricht.

Mit der beschriebenen Vorgehensweise wird ein rasches Aufheizen der Abgasreinigungseinrichtung vor dem Starten des Antriebsaggregats erzielt. Die Durchströmung der Abgasreinigungseinrichtung mit dem erwärmten Fluid entgegen der Abgasströmungsrichtung hat hierbei den Vorteil, dass eine gleichmäßige Durchwärmung der Abgasreinigungseinrichtung erzielt wird, sodass bei dem nachfolgenden Starten des Antriebsaggregats thermische Spannungen innerhalb der Abgasreinigungseinrichtung verhindert oder zumindest teilweise vermieden werden. Entsprechend wird die Lebensdauer der Abgasreinigungseinrichtung erhöht.

Eine weitere Ausführungsform der Erfindung sieht vor, dass das Heizelement in der Bypassleitung angeordnet ist und zum Beheizen der Abgasreinigungseinrichtung das Fluid bezüglich der Abgasströmungsrichtung stromaufwärts der Abgasreinigungseinrichtung aus der Abgasleitung entnommen, mittels des Heizelements erwärmt und stromabwärts der Abgasreinigungseinrichtung wieder der Abgasleitung zugeführt wird, sodass das mittels des Heizelements erwärmte Fluid die Abgasreinigungseinrichtung durchströmt. Das aus der Abgasleitung in die Bypassleitung entnommene Fluid weist also eine geringere Temperatur auf als das aus der Bypassleitung der Abgasleitung nachfolgend wieder zugeführte Fluid. Das Erwärmen des Fluids erfolgt also in der Bypassleitung, insbesondere vollständig.

Mithilfe der Fluidpumpe wird die vorstehend bereits erwähnte Zirkulationsströmung derart erzeugt, dass das stromabwärts der Abgasreinigungseinrichtung aus der Bypassleitung in die Abgasleitung eingebracht Fluid entgegen der Abgasströmungsrichtung die Abgasreinigungseinrichtung durchströmt und diese hierbei aufheizt. Nach dem Durchströmen der Abgasreinigungseinrichtung wird das Fluid wieder aus der Abgasleitung in die Bypassleitung entnommen und erneut mithilfe des Heizelements erwärmt. Eine derartige Anordnung des Heizelements ermöglicht eine vollständige Entkopplung des Heizelements von dem Abgas während des Betriebs des Antriebsaggregats. Das Heizelement wird also nicht mit dem Abgas beaufschlagt, sodass eine thermisch bedingte Beschädigung des Heizelements zuverlässig vermieden wird.

Eine weitere bevorzugte Ausführungsform der Erfindung sieht vor, dass das Heizelement in der Abgasleitung bezüglich der Abgasströmungsrichtung stromabwärts der Abgasreinigungseinrichtung angeordnet ist und zum Beheizen der Abgasreinigungseinrichtung das Fluid bezüglich der Abgasströmungsrichtung stromaufwärts der Abgasreinigungseinrichtung aus der Abgasleitung entnommen und stromabwärts der Abgasreinigungseinrichtung wieder der Abgasleitung zum Durchströmen der Abgasreinigungseinrichtung zugeführt wird, sodass das Fluid mittels des Heizelements erwärmt wird und anschließend die Abgasreinigungseinrichtung durchströmt. Die Anordnung des Heizelements in der Abgasleitung stromabwärts der Abgasreinigungseinrichtung kann zusätzlich oder alternativ zu der Anordnung des Heizelements in der Bypassleitung vorliegen.

Aufgrund der Anordnung des Heizelements in der Abgasleitung wird das Heizelement während des Betriebs des Antriebsaggregats zwar von Abgas angeströmt oder durchströmt. Wegen seiner Anordnung stromabwärts der Abgasreinigungseinrichtung ist die thermische Belastung des Heizelements jedoch deutlich verringert, sodass eine Verringerung der Lebensdauer des Heizelements aufgrund thermischer Belastung nicht zu erwarten ist. Wie bereits vorstehend erläutert, wird zum Beheizen der Abgasreinigungseinrichtung die Fluidpumpe derart betrieben, dass das Fluid stromaufwärts der Abgasreinigungseinrichtung aus der Bypassleitung entnommen und stromabwärts wieder eingebracht wird, nämlich insbesondere bei derselben Temperatur. Nachfolgend durchströmt das in die Abgasleitung eingebrachte Abgas zunächst das Heizelement und nachfolgend die Abgasreinigungseinrichtung, sodass es vor dem Durchströmen der Abgasreinigungseinrichtung mithilfe des Heizelements erwärmt wird und nachfolgend die Abgasreinigungseinrichtung aufheizt.

Eine Weiterbildung der Erfindung sieht vor, dass das Heizelement in der Abgasleitung bezüglich der Abgasströmungsrichtung stromaufwärts der Abgasreinigungseinrichtung angeordnet ist und zum Beheizen der Abgasreinigungseinrichtung das mittels des Heizelements erwärmte Fluid bezüglich der Abgasströmungsrichtung stromaufwärts der Abgasreinigungseinrichtung aus der Abgasleitung entnommen und stromabwärts der Abgasreinigungseinrichtung wieder der Abgasleitung zum Durchströmen der Abgasreinigungseinrichtung zugeführt wird, sodass das mittels des Heizelements erwärmte Fluid die Abgasreinigungseinrichtung durchströmt. Die Anordnung des Heizelements stromaufwärts der Abgasreinigungseinrichtung kann zusätzlich oder alternativ zu der Anordnung stromabwärts und/oder in der Abgasleitung vorliegen.

Zwar wird durch die stromaufwärtige Anordnung des Heizelements die thermische Belastung des Heizelements durch das von dem Antriebsaggregat erzeugte Abgas erhöht. Mit dieser Anordnung kann jedoch eine besonders gleichmäßige Durchwärmung der Abgasreinigungseinrichtung erzielt werden, weil die Abgasreinigungseinrichtung einerseits durch konduktive Wärmeübertragung von dem Heizelement aufgewärmt werden kann und andererseits mithilfe des Heizelements erwärmtes Fluid in die Abgasreinigungseinrichtung einströmt. Mithilfe des Heizelements kann die Abgasreinigungseinrichtung somit von entgegengesetzten Seiten beheizt werden, nämlich einerseits konduktiv und andererseits mithilfe des Fluids konvektiv. Für das konduktive Aufheizen ist es besonders bevorzugt vorgesehen, dass das Heizelement unmittelbar an der Abgasreinigungseinrichtung anliegt oder zumindest konduktiv wärmeübertragend mit dieser verbunden ist.

Im Rahmen einer weiteren Ausgestaltung der Erfindung ist vorgesehen, dass stromabwärts der Abgasreinigungseinrichtung wenigstens eine weitere Abgasreinigungseinrichtung in der Abgasleitung angeordnet ist und das Fluid zum Beheizen der Abgasreinigungseinrichtung stromabwärts der weiteren Abgasreinigungseinrichtung in die Abgasleitung eingebracht wird. Zusätzlich zu der Abgasreinigungseinrichtung liegt also die weitere Abgasreinigungseinrichtung in der Abgasleitung vor. Die Abgasreinigungseinrichtung und die weitere Abgasreinigungseinrichtung sind strömungstechnisch hintereinander in der Abgasleitung angeordnet, sodass während eines Betriebs des Antriebsaggregats zunächst die Abgasreinigungseinrichtung und anschließend die weitere Abgasreinigungseinrichtung von dem Abgas durchströmt werden.

Die elektrische Heizanordnung ist derart ausgestaltet, dass sowohl die Abgasreinigungseinrichtung als auch die weitere Abgasreinigungseinrichtung mit ihr beheizbar ist. Hierzu mündet die Bypassleitung auf der der Abgasreinigungseinrichtung abgewandten Seite der weiteren Abgasreinigungseinrichtung in die Abgasleitung ein. Durch die Bypassleitung in die Abgasleitung eingebrachtes Fluid durchströmt also zunächst die weitere Abgasreinigungseinrichtung und erst anschließend die Abgasreinigungseinrichtung. Hierdurch ist ein zuverlässiges Aufheizen der Abgasreinigungseinrichtung und der wenigstens einen weiteren Abgasreinigungseinrichtung realisiert.

Eine bevorzugte weitere Ausgestaltung der Erfindung sieht vor, dass zum weiteren Aufheizen der Abgasreinigungseinrichtung nach dem Starten des Antriebsaggregats die Fluidpumpe zum Durchströmen der Abgasreinigungseinrichtung mit mittels des Heizelements erwärmtem Fluid in Abgasströmungsrichtung durch die Abgasleitung betrieben wird. Nach dem Starten des Antriebsaggregats, also sobald die Abgasleitung von Abgas durchströmt ist, wird die Fluidpumpe nicht mehr zum Durchströmen der Abgasreinigungseinrichtung entgegen der Abgasströmungsrichtung, sondern vielmehr zum Durchströmen in Abgasströmungsrichtung betrieben.

Das bedeutet, dass mithilfe der Fluidpumpe stromabwärts der Abgasreinigungseinrichtung Fluid, insbesondere Abgas in Form des Fluids, aus der Abgasleitung entnommen und stromaufwärts der Abgasreinigungseinrichtung wieder der Abgasleitung zugeführt wird. Eine derartige Vorgehensweise ist insbesondere dann sinnvoll, falls das Heizelement in der Bypassleitung angeordnet ist. In diesem Fall kann das der Abgasleitung entnommene Fluid nach dem Durchströmen der Abgasreinigungseinrichtung nochmals erwärmt und erneut der Abgasreinigungseinrichtung zugeführt werden. Mit einer derartigen Vorgehensweise wird eine besonders effektive und rasche Aufheizung der Abgasreinigungseinrichtung erzielt.

Eine weitere bevorzugte Ausführung der Erfindung sieht vor, dass als Heizelement eine strömungstechnisch unmittelbar an die Abgasreinigungseinrichtung angrenzende Heizscheibe verwendet wird. Unter der Heizscheibe ist ein Heizelement zu verstehen, welches von dem zu erwärmenden Fluid beziehungsweise Abgas durchströmt wird. Die Heizscheibe ist grundsätzlich scheibenförmig. Bevorzugt durchgreift sie einen Strömungsquerschnitt der Abgasleitung zumindest überwiegend, also wenigstens zu 50 %, bevorzugt jedoch vollständig. Beispielsweise weist die Heizscheibe ein Heizgitter auf, welches elektrisch beheizbar ist. Die Heizscheibe grenzt strömungstechnisch unmittelbar an die Abgasreinigungseinrichtung an, entweder stromaufwärts oder stromabwärts bezüglich der Abgasströmungsrichtung. Hierdurch wird zusätzlich zu dem konvektiven Aufheizen der Abgasreinigungseinrichtung mittels des erwärmten Fluid gleichzeitig ein konduktives Aufheizen realisiert. Entsprechend ist das Aufheizen der Abgasreinigungseinrichtung besonders effektiv.

Eine Weiterbildung der Erfindung sieht vor, dass als Fluidpumpe eine Verdrängerpumpe, Strömungspumpe oder Strahlpumpe verwendet wird. Grundsätzlich ist die Fluidpumpe beliebig ausgestaltet, solange mittels ihr Fluid aus der Abgasleitung in die Bypassleitung entnehmbar und nachfolgend aus der Bypassleitung in die Abgasleitung einbringbar ist. Wird die Verdrängerpumpe oder die Strömungspumpe als Fluidpumpe verwendet, so ist üblicherweise keine weitere Fluidpumpe notwendig. Liegt hingegen die Fluidpumpe in Form der Strahlpumpe vor, so ist zum Betreiben der Strahlpumpe üblicherweise eine Unterdruckquelle oder Überdruckquelle notwendig. Als solche dient beispielsweise wiederum eine Verdrängerpumpe oder eine Strömungspumpe. Wird also die Strahlpumpe verwendet, so liegt vorzugsweise zusätzlich zu dieser die Verdrängerpumpe oder die Strömungspumpe vor. Die genannten Pumpentypen ermöglichen ein besonders effektives Umwälzen des Fluids in der Bypassleitung und der Abgasleitung.

Schließlich kann im Rahmen einer weiteren Ausführungsform der Erfindung vorgesehen sein, dass als Abgasreinigungseinrichtung ein Fahrzeugkatalysator und/oder ein Partikelfilter verwendet wird. Der Fahrzeugkatalysator kann grundsätzlich in beliebiger Ausgestaltung vorliegen. Beispielsweise ist der Fahrzeugkatalysator ein Drei-Wege-Katalysator, ein Oxidationskatalysator, ein Speicherkatalysator, insbesondere ein NOₓ-Speicherkatalysator, oder ein SCR-Katalysator. Alternativ liegt die Abgasreinigungseinrichtung als Partikelfilter vor, vorzugsweise als Dieselpartikelfilter oder als Ottopartikelfilter. Ebenso kann die Abgasreinigungseinrichtung als Kombination aus Fahrzeugkatalysator und Partikelfilter ausgestaltet sein. Bevorzugt ist in diesem Fall die Abgasreinigungseinrichtung ein Partikelfilter mit einer katalytischen Beschichtung. Die beschriebene Ausgestaltung ermöglicht eine besonders effektive Reinigung des Abgases des Antriebsaggregats.

Die Erfindung betrifft weiterhin eine Antriebseinrichtung, insbesondere zur Durchführung des Verfahrens gemäß den Ausführungen im Rahmen dieser Beschreibung, wobei die Antriebseinrichtung ein Antriebaggregat sowie eine in einer Abgasleitung angeordnete Abgasreinigungseinrichtung zur Reinigung von Abgas des Antriebsaggregats aufweist, wobei die Abgasreinigungseinrichtung mittels einer elektrischen Heizanordnung beheizbar ist, die ein Heizelement zum Erwärmen eines Fluids sowie eine einerseits der Abgasreinigungseinrichtung von der Abgasleitung abzweigende und andererseits in sie einmündende Bypassleitung aufweist, in der eine Fluidpumpe zum Fördern des Fluids durch die Abgasreinigungseinrichtung angeordnet ist. Dabei ist vorgesehen, dass die Antriebseinrichtung dazu ausgebildet ist, zum Beheizen der Abgasreinigungseinrichtung vor einem Starten des Antriebsaggregats die Fluidpumpe zum Durchströmen der Abgasreinigungseinrichtung mit mittels des Heizelements erwärmtem Fluid entgegen einer Abgasströmungsrichtung durch die Abgasleitung zu betreiben.

Auf die Vorteile einer derartigen Vorgehensweise beziehungsweise einer derartigen Ausgestaltung der Antriebseinrichtung wurde bereits hingewiesen. Sowohl die Antriebseinrichtung als auch das Verfahren zu ihrem Betreiben können gemäß den Ausführungen im Rahmen dieser Beschreibung weitergebildet sein, sodass insoweit auf diese verwiesen wird.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Darstellung einer Antriebseinrichtung in einer ersten Ausführungsform,
- Figur 2: eine schematische Darstellung der Antriebseinrichtung in einer zweiten Ausführungsform,
- Figur 3: eine schematische Darstellung der Antriebseinrichtung in einer dritten Ausführungsform, sowie
- Figur 4: eine schematische Darstellung der Antriebseinrichtung in einer vierten Ausführungsform.

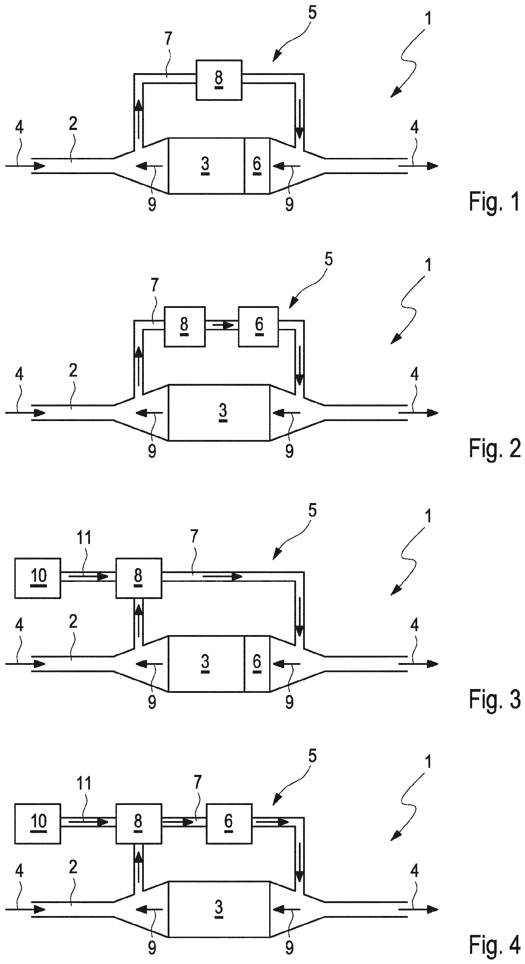

Die Figur 1 zeigt eine schematische Darstellung einer Antriebseinrichtung 1, insbesondere für ein Kraftfahrzeug, in einer ersten Ausführungsform. Die Antriebseinrichtung 1 verfügt über ein hier nicht dargestelltes Antriebsaggregat sowie über eine Abgasleitung 2, in welcher eine Abgasreinigungseinrichtung 3 angeordnet ist. Während eines Betriebs des Antriebsaggregats, welches beispielsweise in Form einer Brennkraftmaschine vorliegt, werden die Abgasleitung 2 und die Abgasreinigungseinrichtung 3 von Abgas des Antriebsaggregats in einer durch Pfeile 4 angedeuteten Abgasströmungsrichtung durchströmt.

Die Antriebseinrichtung 1 weist zudem eine elektrische Heizanordnung 5 auf, die ein Heizelement 6, eine Bypassleitung 7 und eine Fluidpumpe 8 aufweist. Die Bypassleitung 7 mündet beidseitig der Abgasreinigungseinrichtung 3 in die Abgasleitung 2 ein. In dem hier dargestellten Ausführungsbeispiel ist die Fluidpumpe 8 in der Bypassleitung 7 angeordnet, wohingegen das Heizelement 6 in der Abgasleitung 2 vorliegt, nämlich bezüglich der Abgasströmungsrichtung stromabwärts der Abgasreinigungseinrichtung 3.

Es ist vorgesehen, zum Beheizen der Abgasreinigungseinrichtung 3 vor eine Starten des Antriebsaggregats die Fluidpumpe 8 derart zu betreiben, dass die Abgasreinigungseinrichtung 3 mit mittels des Heizelements 6 erwärmtem Fluid entgegen der Abgasströmungsrichtung durchströmt wird. Hierzu wird der Abgasleitung 2 bezüglich der Abgasströmungsrichtung stromaufwärts der Abgasreinigungseinrichtung 3 Fluid entnommen und ihr stromabwärts der Abgasreinigungseinrichtung 3 wieder zugeführt. Dieses Fluid durchströmt nun das Heizelement 6 und wird hierbei erwärmt. Anschließend durchströmt das Fluid die Abgasreinigungseinrichtung 3, nämlich gemäß den Pfeilen 9, und heizt diese somit auf. Anschließend kann das Fluid wieder aus der Abgasleitung 2 in die Bypassleitung 7 entnommen werden, sodass eine Zirkulationsströmung in der Abgasleitung 2 und der Bypassleitung 7 über die Abgasreinigungseinrichtung 3 und das Heizelement 6 vorliegt.

Die Figur 2 zeigt eine schematische Darstellung der Antriebseinrichtung 1 in einer zweiten Ausführungsform. Diese ähnelt der ersten Ausführungsform, sodass auf die entsprechenden Ausführungen verwiesen und nachfolgend lediglich auf die Unterschiede eingegangen wird. Diese liegen darin, dass das Heizelement 6 nun nicht in der Abgasleitung 2, sondern vielmehr in der Bypassleitung 7 vorliegt. Das der Abgasleitung 2 entnommene Abgas wird entsprechend in der Bypassleitung 7 durch das Heizelement 6 geführt und hierbei erwärmt. Das erwärmte Fluid wird bezüglich der Abgasströmungsrichtung stromabwärts der Abgasreinigungseinrichtung 3 in die Abgasleitung 2 eingebracht, sodass es die Abgasreinigungseinrichtung 3 durchströmen kann, nämlich in Richtung der Pfeile 9.

Die Figur 3 zeigt eine schematische Darstellung der Antriebseinrichtung in einer dritten Ausführungsform. Wiederum wird auf die vorstehenden Ausführungen zu der ersten Ausführungsform hingewiesen und lediglich auf die Unterschiede eingegangen. Diese sind darin zu sehen, dass als Fluidpumpe 8, welche in der Bypassleitung 7 vorliegt, eine Strahlpumpe verwendet wird, nämlich eine Saugstrahlpumpe. Zur Versorgung der Strahlpumpe mit einem Treibmedium ist zusätzlich eine weitere Pumpe 10 vorgesehen, welcher der Fluidpumpe 8 das Treibmedium entsprechend dem Pfeil 11 zuführt.

Die Figur 4 zeigt die Antriebseinrichtung 1 in einer vierten Ausführungsform, in schematischer Darstellung. Die vierte Ausführungsform stellt eine Kombination der zweiten Ausführungsform und der dritten Ausführungsform dar, sodass auf die vorstehenden Ausführungen vollumfänglich Bezug genommen wird. Die Unterschiede zu der ersten Ausführungsform sind darin zu sehen, dass das Heizelement 6 entsprechend der zweiten Ausführungsform in der Bypassleitung 7 vorliegt, und dass die Fluidpumpe 8 entsprechend der dritten Ausführungsform als Strahlpumpe vorliegt. Die weiteren Ausführungen zu den vorstehend beschriebenen Ausgestaltungen gelten unverändert fort.

Mit der beschriebenen Ausgestaltung der Antriebseinrichtung 1 wird ein zuverlässiges, rasches und vor allem gleichmäßiges Aufheizen der Abgasreinigungseinrichtung 3 erzielt, nämlich indem die Abgasreinigungseinrichtung 3 entgegen der Abgasströmungsrichtung, wie sie durch die Pfeile 9 angedeutet ist, mit erwärmtem Fluid durchströmt wird. Das Heizelement 6 ist ein elektrisches Heizelement, wird also mit elektrischem Strom erwärmt. Dies stellt ein Erwärmen der Abgasreinigungseinrichtung 3 bereits vor dem Starten des Antriebsaggregats sicher.

### BEZUGSZEICHENLISTE

- 1: Antriebseinrichtung
- 2: Abgasleitung
- 3: Abgasreinigungseinrichtung
- 4: Pfeile
- 5: Heizanordnung
- 6: Heizelement
- 7: Bypassleitung
- 8: Fluidpumpe
- 9: Pfeile
- 10: Pumpe
- 11: Pfeil

## Patentansprüche

1. Verfahren zum Betreiben einer Antriebseinrichtung (1), die ein Antriebsaggregat sowie eine in einer Abgasleitung (2) angeordnete Abgasreinigungseinrichtung (3) zur Reinigung von Abgas des Antriebsaggregats aufweist, wobei die Abgasreinigungseinrichtung (3) zumindest zeitweise mittels einer elektrischen Heizanordnung (5) beheizt wird, die ein Heizelement (6) zum Erwärmen eines Fluids sowie eine einerseits der Abgasreinigungseinrichtung (3) von der Abgasleitung (2) abzweigende und andererseits in sie einmündende Bypassleitung (7) aufweist, in der eine Fluidpumpe (8) zum Fördern des Fluids durch die Abgasreinigungseinrichtung (3) angeordnet ist, **dadurch gekennzeichnet, dass** zum Beheizen der Abgasreinigungseinrichtung (3) vor einem Starten des Antriebsaggregats die Fluidpumpe (8) zum Durchströmen der Abgasreinigungseinrichtung (3) mittels des Heizelements (6) erwärmtem Fluid entgegen einer Abgasströmungsrichtung durch die Abgasleitung (2) betrieben wird.

2. Verfahren nach Anspruch 1, **dadurch gekennzeichnet, dass** das Heizelement (6) in der Bypassleitung (7) angeordnet ist und zum Beheizen der Abgasreinigungseinrichtung (3) das Fluid bezüglich der Abgasströmungsrichtung stromaufwärts der Abgasreinigungseinrichtung (3) aus der Abgasleitung (2) entnommen, mittels des Heizelements (6) erwärmt und stromabwärts der Abgasreinigungseinrichtung (3) wieder der Abgasleitung (2) zugeführt wird, sodass das mittels des Heizelements (6) erwärmte Fluid die Abgasreinigungseinrichtung (3) durchströmt.

3. Verfahren nach einem der vorhergehenden Ansprüche, **dadurch gekennzeichnet, dass** das Heizelement (6) in der Abgasleitung (2) bezüglich der Abgasströmungsrichtung stromabwärts der Abgasreinigungseinrichtung (3) angeordnet ist und zum Beheizen der Abgasreinigungseinrichtung (3) das Fluid bezüglich der Abgasströmungsrichtung stromaufwärts der Abgasreinigungseinrichtung (3) aus der Abgasleitung (2) entnommen und stromabwärts der Abgasreinigungseinrichtung (3) wieder der Abgasleitung (2) zum Durchströmen der Abgasreinigungseinrichtung (3) zugeführt wird, sodass das Fluid mittels des Heizelements (6) erwärmt wird und anschließen die Abgasreinigungseinrichtung (3) durchströmt.

4. Verfahren nach einem der vorhergehenden Ansprüche, **dadurch gekennzeichnet, dass** das Heizelement (6) in der Abgasleitung (2) bezüglich der Abgasströmungsrichtung stromaufwärts der Abgasreinigungseinrichtung (3) angeordnet ist und zum Beheizen der Abgasreinigungseinrichtung (3) das mittels des Heizelements (6) erwärmte Fluid bezüglich der Abgasströmungsrichtung stromaufwärts der Abgasreinigungseinrichtung (3) aus der Abgasleitung (2) entnommen und stromabwärts der Abgasreinigungseinrichtung (3) wieder der Abgasleitung (2) zum Durchströmen der Abgasreinigungseinrichtung (3) zugeführt wird, sodass das mittels des Heizelements (6) erwärmte Fluid die Abgasreinigungseinrichtung (3) durchströmt.

5. Verfahren nach einem der vorhergehenden Ansprüche, **dadurch gekennzeichnet, dass** stromabwärts der Abgasreinigungseinrichtung (3) wenigstens eine weitere Abgasreinigungseinrichtung in der Abgasleitung (2) angeordnet ist und das Fluid zum Beheizen der Abgasreinigungseinrichtung (3) stromabwärts der weiteren Abgasreinigungseinrichtung in die Abgasleitung (2) eingebracht wird.

6. Verfahren nach einem der vorhergehenden Ansprüche, **dadurch gekennzeichnet, dass** zum weiteren Aufheizen der Abgasreinigungseinrichtung (3) nach dem Starten des Antriebsaggregats die Fluidpumpe (8) zum Durchströmen der Abgasreinigungseinrichtung (3) mit mittels des Heizelements (6) erwärmtem Fluid in Abgasströmungsrichtung durch die Abgasleitung (2) betrieben wird.

7. Verfahren nach einem der vorhergehenden Ansprüche, **dadurch gekennzeichnet, dass** als Heizelement (6) eine strömungstechnisch unmittelbar an die Abgasreinigungseinrichtung (3) angrenzende Heizscheibe verwendet wird.

8. Verfahren nach einem der vorhergehenden Ansprüche, **dadurch gekennzeichnet, dass** als Fluidpumpe (8) eine Verdrängerpumpe, Strömungspumpe oder Strahlpumpe verwendet wird.

9. Verfahren nach einem der vorhergehenden Ansprüche, **dadurch gekennzeichnet, dass** als Abgasreinigungseinrichtung (3) ein Fahrzeugkatalysator und/oder ein Partikelfilter verwendet wird.

10. Antriebseinrichtung (1) zur Durchführung des Verfahrens nach einem oder mehreren der vorhergehenden Ansprüche, wobei die Antriebseinrichtung (1) ein Antriebsaggregat sowie eine in einer Abgasleitung (2) angeordnete Abgasreinigungseinrichtung (3) zur Reinigung von Abgas des Antriebsaggregats aufweist, wobei die Abgasreinigungseinrichtung (3) mittels einer elektrischen Heizanordnung (5) beheizbar ist, die ein Heizelement (6) zum Erwärmen eines Fluids sowie eine einerseits in der Abgasreinigungseinrichtung (3) von der Abgasleitung (2) abzweigende und andererseits in sie einmündende Bypassleitung (7) aufweist, in der eine Fluidpumpe (8) zum Fördern des Fluids durch die Abgasreinigungseinrichtung (3) angeordnet ist, **dadurch gekennzeichnet, dass** die Antriebseinrichtung (1) dazu ausgebildet ist, zum Beheizen der Abgasreinigungseinrichtung (3) vor einem Starten des Antriebsaggregats die Fluidpumpe (8) zum Durchströmen der Abgasreinigungseinrichtung (3) mit mittels des Heizelements (6) erwärmtem Fluid entgegen einer Abgasströmungsrichtung durch die Abgasleitung (2) zu betreiben.

## Claims

1. Method for operating a drive apparatus (1) which has a drive assembly and an exhaust gas purification apparatus (3) for purifying exhaust gas from the drive assembly, said purification apparatus being arranged in an exhaust gas line (2), wherein the exhaust gas purification apparatus (3) is at least intermittently heated by an electric heater arrangement (5) which has a heating element (6) for heating a fluid, and a bypass line (7) which branches off from the exhaust gas line (2) on one side of the exhaust gas purification apparatus (3) and leads into said line on the other side, in which bypass line a fluid pump (8) for conveying the fluid through the exhaust gas purification apparatus (3) is arranged, **characterised in that**, in order to heat the exhaust gas purification apparatus (3) before the drive assembly is started, the fluid pump (8) is operated in order to cause fluid heated by the heating element (6) to flow through the exhaust gas purification apparatus (3) counter to an exhaust gas flow direction through the exhaust gas line (2).

2. Method according to claim 1, **characterised in that** the heating element (6) is arranged in the bypass line (7) and, in order to heat the exhaust gas purification apparatus (3), the fluid is withdrawn from the exhaust gas line (2) upstream of the exhaust gas purification apparatus (3) with respect to the exhaust gas flow direction, heated by the heating element (6), and fed back to the exhaust gas line (2) downstream of the exhaust gas purification apparatus (3), such that fluid heated by the heating element (6) flows through the exhaust gas purification apparatus (3).

3. Method according to any of the preceding claims, **characterised in that** the heating element (6) is arranged in the exhaust gas line (2) downstream of the exhaust gas purification apparatus (3) with respect to the exhaust gas flow direction and, in order to heat the exhaust gas purification apparatus (3), the fluid is withdrawn from the exhaust gas line (2) upstream of the exhaust gas purification apparatus (3) with respect to the exhaust gas flow direction and fed back to the exhaust gas line (2) to flow through the exhaust gas purification apparatus (3) downstream of the exhaust gas purification apparatus (3), such that the fluid is heated by the heating element (6) and subsequently flows through the exhaust gas purification apparatus (3).

4. Method according to any of the preceding claims, **characterised in that** the heating element (6) is arranged in the exhaust gas line (2) downstream of the exhaust gas purification apparatus (3) with respect to the exhaust gas flow direction and, in order to heat the exhaust gas purification apparatus (3), the fluid heated by the heating element (6) is withdrawn from the exhaust gas line (2) upstream of the exhaust gas purification apparatus (3) with respect to the exhaust gas flow direction and fed back to the exhaust gas line (2) to flow through the exhaust gas purification apparatus (3) downstream of the exhaust gas purification apparatus (3), such that the fluid heated by the heating element (6) flows through the exhaust gas purification apparatus (3).

5. Method according to any of the preceding claims, **characterised in that** at least one further exhaust gas purification apparatus is arranged in the exhaust gas line (2) downstream of the exhaust gas purification apparatus (3) and the fluid for heating the exhaust gas purification apparatus (3) is introduced into the exhaust gas line (2) downstream of the further exhaust gas purification apparatus.

6. Method according to any of the preceding claims, **characterised in that**, in order to further heat the exhaust gas purification apparatus (3) after the drive assembly is started, the fluid pump (8) is operated in order to cause fluid heated by the heating element (6) to flow through the exhaust gas purification apparatus (3) in the exhaust gas flow direction through the exhaust gas line (2).

7. Method according to any of the preceding claims, **characterised in that** a heating disc directly adjoining the exhaust gas purification apparatus (3) in terms of flow is used as the heating element (6).

8. Method according to any of the preceding claims, **characterised in that** a displacement pump, flow pump or jet pump is used as the fluid pump (8).

9. Method according to any of the preceding claims, **characterised in that** a vehicle catalytic converter and/or a particle filter is used as the exhaust gas purification apparatus (3).

10. Drive apparatus (1) for performing the method according to one or more of the preceding claims, wherein the drive apparatus (1) has a drive assembly and an exhaust gas purification apparatus (3) for purifying exhaust gas from the drive assembly, said purification apparatus being arranged in an exhaust gas line (2), wherein the exhaust gas purification apparatus (3) is at least intermittently heated by an electric heater arrangement (5) which has a heating element (6) for heating a fluid, and a bypass line (7) which branches off from the exhaust gas line (2) on one side of the exhaust gas purification apparatus (3) and leads into said line on the other side, in which bypass line a fluid pump (8) for conveying the fluid through the exhaust gas purification apparatus (3) is arranged, **characterised in that** the drive apparatus (1) is designed, in order to heat the exhaust gas purification apparatus (3) before the drive assembly is started, to operate the fluid pump (8) in order to cause fluid heated by the heating element (6) to flow through the exhaust gas purification apparatus (3) counter to an exhaust gas flow direction through the exhaust gas line (2).

## Revendications

1. Procédé de fonctionnement d'un appareil de propulsion (1) qui présente un groupe motopropulseur ainsi qu'un appareil d'épuration de gaz d'échappement (3) agencé dans une conduite de gaz d'échappement (2) pour l'épuration de gaz d'échappement du groupe motopropulseur, dans lequel l'appareil d'épuration de gaz d'échappement (3) est chauffé au moins temporairement au moyen d'un agencement de chauffage (5) électrique qui présente un élément de chauffage (6) pour le chauffage d'un fluide ainsi qu'une conduite de dérivation (7) bifurquant d'un côté de l'appareil d'épuration de gaz d'échappement (3) de la conduite de gaz d'échappement (2) et débouchant de l'autre côté dans celle-ci, dans laquelle une pompe à fluide (8) est agencée pour le refoulement du fluide par l'appareil d'épuration de gaz d'échappement (3), **caractérisé en ce que** pour le chauffage de l'appareil d'épuration de gaz d'échappement (3) avant un démarrage du groupe motopropulseur, la pompe à fluide (8) est actionnée pour le passage par l'appareil d'épuration de gaz d'échappement (3) du fluide chauffé au moyen de l'élément de chauffage (6) dans le sens inverse à un sens d'écoulement de gaz d'échappement par la conduite de gaz d'échappement (2).

2. Procédé selon la revendication 1, **caractérisé en ce que** l'élément de chauffage (6) est agencé dans la conduite de dérivation (7) et pour le chauffage de l'appareil d'épuration de gaz d'échappement (3), le fluide est retiré en se référant au sens d'écoulement de gaz d'échappement en amont de l'appareil d'épuration de gaz d'échappement (3) hors de la conduite de gaz d'échappement (2), est chauffé au moyen de l'élément de chauffage (6) et est ramené en aval de l'appareil d'épuration de gaz d'échappement (3) à la conduite de gaz d'échappement (2) de sorte que le fluide chauffé au moyen de l'élément de chauffage (6) passe par l'appareil d'épuration de gaz d'échappement (3).

3. Procédé selon l'une quelconque des revendications précédentes, **caractérisé en ce que** l'élément de chauffage (6) est agencé dans la conduite de gaz d'échappement (2) en se référant au sens d'écoulement de gaz d'échappement en aval de l'appareil d'épuration de gaz d'échappement (3) et pour le chauffage de l'appareil d'épuration de gaz d'échappement (3), le fluide est retiré en se référant au sens d'écoulement de gaz d'échappement en amont de l'appareil d'épuration de gaz d'échappement (3) hors de la conduite de gaz d'échappement (2) et est ramené en aval de l'appareil d'épuration de gaz d'échappement (3) à la conduite de gaz d'échappement (2) pour le passage de l'appareil d'épuration de gaz d'échappement (3) de sorte que le fluide soit chauffé au moyen de l'élément de chauffage (6) et ensuite passe par l'appareil d'épuration de gaz d'échappement (3).

4. Procédé selon l'une quelconque des revendications précédentes, **caractérisé en ce que** l'élément de chauffage (6) est agencé dans la conduite de gaz d'échappement (2) en se référant au sens d'écoulement de gaz d'échappement en amont de l'appareil d'épuration de gaz d'échappement (3) et pour le chauffage de l'appareil d'épuration de gaz d'échappement (3), le fluide chauffé au moyen de l'élément de chauffage (6) est retiré en se référant au sens d'écoulement de gaz d'échappement en amont de l'appareil d'épuration de gaz d'échappement (3) hors de la conduite de gaz d'échappement (2) et est ramené en aval de l'appareil d'épuration de gaz d'échappement (3) à la conduite de gaz d'échappement (2) pour le passage de l'appareil d'épuration de gaz d'échappement (3) de sorte que le fluide chauffé au moyen de l'élément de chauffage (6) passe par l'appareil d'épuration de gaz d'échappement (3).

5. Procédé selon l'une quelconque des revendications précédentes, **caractérisé en ce qu'**en aval de l'appareil d'épuration de gaz d'échappement (3) au moins un autre appareil d'épuration de gaz d'échappement est agencé dans la conduite de gaz d'échappement (2) et le fluide est introduit pour le chauffage de l'appareil d'épuration de gaz d'échappement (3) en aval de l'autre appareil d'épuration de gaz d'échappement dans la conduite de gaz d'échappement (2).

6. Procédé selon l'une quelconque des revendications précédentes, **caractérisé en ce que** pour la suite du chauffage de l'appareil d'épuration de gaz d'échappement (3), après le démarrage du groupe motopropulseur la pompe à fluide (8) est actionnée pour le passage de l'appareil d'épuration de gaz d'échappement (3) avec du fluide chauffé au moyen de l'élément de chauffage (6) dans le sens d'écoulement de gaz d'échappement par la conduite de gaz d'échappement.

7. Procédé selon l'une quelconque des revendications précédentes, **caractérisé en ce qu'**un disque de chauffage directement contigu en écoulement à l'appareil d'épuration de gaz d'échappement (3) est utilisé comme élément de chauffage (6).

8. Procédé selon l'une quelconque des revendications précédentes, **caractérisé en ce qu'**une pompe volumétrique, pompe à écoulement ou pompe à jet est utilisée comme pompe à fluide (8).

9. Procédé selon l'une quelconque des revendications précédentes, **caractérisé en ce qu'**un catalyseur de véhicule et/ou un filtre à particules est utilisé comme appareil d'épuration de gaz d'échappement (3).

10. Appareil de propulsion (1) pour la réalisation du procédé selon l'une ou plusieurs quelconques des revendications précédentes, dans lequel l'appareil de propulsion (1) présente un groupe motopropulseur ainsi qu'un appareil d'épuration de gaz d'échappement (3) agencé dans une conduite de gaz d'échappement (2) pour l'épuration de gaz d'échappement du groupe motopropulseur, dans lequel l'appareil d'épuration de gaz d'échappement (3) peut être chauffé au moyen d'un agencement de chauffage (5) électrique, lequel présente un élément de chauffage (6) pour le chauffage d'un fluide ainsi qu'une conduite de dérivation (7) bifurquant d'un côté dans l'appareil d'épuration de gaz d'échappement (3) de la conduite de gaz d'échappement (2) et débouchant de l'autre côté dans celle-ci, dans laquelle une pompe à fluide (8) est agencée pour le refoulement du fluide à travers l'appareil d'épuration de gaz d'échappement (3), **caractérisé en ce que** l'appareil de propulsion (1) est réalisé afin d'actionner pour le chauffage de l'appareil d'épuration de gaz d'échappement (3) avant un démarrage du groupe motopropulseur la pompe à fluide (8) pour le passage de l'appareil d'épuration de gaz d'échappement (3) avec du fluide chauffé au moyen de l'élément de chauffage (6) dans le sens inverse à un sens d'écoulement de gaz d'échappement par la conduite de gaz d'échappement (2).
